(19) **Europäisches Patentamt / European Patent Office / Office européen des brevets**

(11) **EP 3 745 878 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **19700573.9**

(22) Anmeldetag: **10.01.2019**

(51) Internationale Patentklassifikation (IPC):
*A23L 2/50* (2006.01)      *B01J 19/08* (2006.01)
*A23C 3/07* (2006.01)      *A23L 3/32* (2006.01)
*A23B 7/015* (2006.01)     *A23B 4/015* (2006.01)
*A61L 2/03* (2006.01)

(52) Gemeinsame Patentklassifikation (CPC):
**A23B 11/16; A23B 70/50**

(86) Internationale Anmeldenummer:
**PCT/EP2019/050534**

(87) Internationale Veröffentlichungsnummer:
**WO 2019/149492 (08.08.2019 Gazette 2019/32)**

(54) **SYSTEM ZUR PROZESSÜBERWACHUNG DER BEHANDLUNG VON MEDIEN, INSBESONDERE HACCP-KONFORMES SYSTEM ZUR HALTBARMACHUNG VON LEBENSMITTELN**

SYSTEM FOR PROCESS MONITORING THE TREATMENT OF MEDIA, IN PARTICULAR A HACCP-COMPLIANT SYSTEM FOR PRESERVING FOODS

SYSTÈME DE SURVEILLANCE DES PROCÉDÉS POUR LE TRAITEMENT DE MILIEUX, EN PARTICULIER SYSTÈME CONFORMES À L'HACCP POUR LA CONSERVATION DE PRODUITS ALIMENTAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2018   DE 102018201480**

(43) Veröffentlichungstag der Anmeldung:
**09.12.2020   Patentblatt 2020/50**

(73) Patentinhaber: **Elea Service GmbH**
**49610 Quakenbrück (DE)**

(72) Erfinder:
• **TOEPFL, Stefan**
 **49076 Osnabrück (DE)**
• **WITT, Julian**
 **49078 Osnabrück (DE)**
• **SIEMER, Claudia**
 **49593 Bersenbrück (DE)**

(74) Vertreter: **Grünecker Patent- und Rechtsanwälte PartG mbB**
**Leopoldstraße 4**
**80802 München (DE)**

(56) Entgegenhaltungen:
**US-A- 4 695 472     US-A- 4 838 154
US-A- 6 093 432     US-A1- 2002 168 456**

• **HENRY JÄGER: "Process performance analysis of pulsed electric field (PEF) food applications vorgelegt von Diplom-Ingenieur", BERLIN, 1 January 2011 (2011-01-01), pages 83, XP055572216, Retrieved from the Internet <URL:https://d-nb.info/1031756574/34> [retrieved on 20190320]**

**Beschreibung**

Die vorliegende Erfindung betrifft ein System zur Prozessüberwachung der Behandlung von Medien, insbesondere ein HACCP-konformes System zur Haltbarmachung von Lebensmitteln.

Die vorliegende Beschreibung enthält ferner ein beispielhaftes Verfahren zum Überwachen eines Prozesses zum Behandeln von Medien, insbesondere HACCP-konformes Verfahren zum Haltbarmachen von Lebensmitteln.

Die Qualitätssicherung spielt bei der Herstellung und Behandlung von Lebensmitteln eine wichtige Rolle. Mit der Normenreihe EN ISO 9000 sind Normen geschaffen worden, welche die Grundsätze für Maßnahmen zum Qualitätsmanagement dokumentieren, und die das gegenseitige Verständnis von Qualitätsmanagementsystemen auf nationaler und internationaler Ebene erleichtern. Das Hazard Analysis and Critical Control Points (HACCP)-Konzept, zu Deutsch: "Gefahrenanalyse kritischer Lenkungspunkte", ist ein klar strukturiertes und auf präventive Maßnahmen ausgerichtetes Werkzeug, das zur Vermeidung von Gefahren im Zusammenhang mit Lebensmitteln, die zu einer Erkrankung oder Verletzung von Konsumenten führen können, dient. Sowohl die deutsche Lebensmittelhygiene-Verordnung als auch eine Verordnung der Europäischen Gemeinschaft sehen die Anwendung des HACCP-Konzepts in allen Unternehmen vor, die mit der Produktion, der Verarbeitung und dem Vertrieb von Lebensmitteln beschäftigt sind.

Unter Qualitätssicherung fallen unterschiedliche Ansätze und Maßnahmen zur Sicherstellung festgelegter Qualitätsanforderungen an das Endprodukt. Ein Qualitätsmerkmal von Medien, insbesondere Lebensmitteln, ist deren Haltbarkeit. Um die Haltbarkeit von Lebensmitteln zu verlängern, gibt es unterschiedlichste Konservierungsverfahren, die den Verderb des Lebensmittels und seiner Inhaltsstoffe in ungenießbare oder gesundheitsschädliche Zerfallsprodukte stoppen oder zumindest verlangsamen. Der Zerfall, den die Konservierung verhindern soll, tritt meist durch biochemische Prozesse wie die mikrobielle oder enzymatische Aktivität ein. Häufigste Anwendung ist der Erhalt von Nahrung im Rahmen der industriellen Produktion, welche im industriellen Maßstab beispielsweise durch Erhitzen, Destillation, Kühlung oder sonstige Maßnahmen erzielt wird.

Die Elektroporation ist eine Methode, Zellmembranen vorübergehend oder dauerhaft durchlässig (permeabel) zu machen. Diese Technik wird unter anderem in der Mikrobiologie verwendet, um DNA in Zellen einzuschleusen. Auch im Bereich der Lebensmittel- und Bioverfahrenstechnik wird die Elektroporation zur Verbesserung von Massentransportprozessen oder Inaktivierung von Mikroorganismen eingesetzt.

Ein Vorteil der Elektroporation ist, dass diese ein nicht-thermisches Verfahren darstellt, und somit zur Haltbarmachung von temperatursensitiven Medien, beispielsweise Milchprodukten, Fruchtsäften oder Smoothies eingesetzt werden kann, um deren Haltbarmachung durch Inaktivierung von Mikroorganismen zu verbessern.

Bei der Elektroporation werden kurze Pulse elektrischer Felder erzeugt, welche die Zellmembranen durchlöchern. Entscheidend für eine erfolgreiche Elektroporation sind eine Vielzahl unterschiedlicher Parameter, beispielsweise die Stärke des elektrischen Feldes, die Pulsform, die Anzahl der Pulse oder die Pulsdauer. Es gibt keine festgeschriebenen Standards im Hinblick auf Dosis bzw. Intensität für die Behandlung von Medien mittels einer Elektroporation. Die Prozessparameter werden vom Anwender daher auf Einzelfallbasis ausgewählt und optimiert, was zeitaufwändig ist und ein hohes technisches und wissenschaftliches Fachwissen erfordert. Eine Vorrichtung zur kontinuierlichen Behandlung von fließfähigen Lebensmitteln mittels elektrischer Felder ist beispielsweise in der US4838154 gezeigt.

Es ist somit Aufgabe der vorliegenden Erfindung, ein System zur Prozessüberwachung der Behandlung von Medien bereitzustellen, welches sich standardisieren lässt und zuverlässig die erfolgreiche Behandlung der Medien sicherstellt.

Das eingangs genannte System zur Prozessüberwachung der Behandlung von Medien löst diese Aufgabe durch die Merkmale des Anspruch 1.

In dem eingangs genannten beispielhaften wird das Medium mit einem gepulsten Feld behandelt, die Änderung eines Zustandsparameters des Mediums, welcher durch die Behandlung mit dem gepulsten elektrischen Feld hervorgerufen wird, wird ermittelt und die ermittelte Änderung wird mit einem vorgegebenen Änderungszielwert verglichen, und ein Warnsignal wird ausgegeben, falls die Differenz zwischen ermittelter Änderung und vorgegebenem Änderungszielwert einen Grenzwert überschreitet.

Indem man einen Elektroporator mit einer Messvorrichtung und einer Auswertevorrichtung koppelt, wird es möglich, die beabsichtigte Elektroporationsbehandlung des Mediums zuverlässig und standardisiert sicherzustellen. Dies wird dadurch erreicht, dass das System die aufgrund der Elektroporation erfolgende Änderung eines bestimmten Zustandsparameters des zu behandelnden Mediums überwacht und feststellt, ob diese Änderung einem angestrebten Änderungszielwert im Rahmen üblicher Toleranzen entspricht. Bei Einhaltung dieser Toleranzen ist gewährleistet, dass die Behandlung erfolgreich war, beispielsweise dass ein Lebensmittel entsprechend den Vorgaben haltbar gemacht wurde. Zudem gibt das erfindungsgemäße System sofort eine Warnung aus, falls die Elektroporation (im Folgenden auch PEF(Pulsed Electric Field)-Behandlung genannt), nicht den gewünschten Effekt hatte, beispielsweise die Anzahl der schädlichen Mikroorganismen im Medium nicht auf ein erwünschtes Mindestmaß reduziert hat.

Unter einem *"Medium"* im Sinne dieser Anmeldung ist ein Stoff bzw. eine Substanz zu verstehen. Darunter fallen insbesondere Lebensmittel.

Unter einer *"Behandlung"* ist ein Prozess zu verstehen, welcher Parameter des Mediums verändert, der beispielsweise eine Strukturänderung oder stoffliche Änderung des Mediums herbeiführt. Zu Behandlungen im Sinne der vorliegenden Erfindung zählt die Konservierung als Haltbarmachung von Lebensmitteln, welche insbesondere von der Anzahl schädlicher Mikroorganismen im Medium abhängt.

Ein *"Zustandsparameter"* (oder auch Zustandsgröße) ist eine makroskopische physikalische Größe, die den Zustand des Mediums beschreibt, beispielsweise Druck, Temperatur, Volumen, Teilchenzahl bzw. Stoffmenge, Entropie, Enthalpie, pH-Wert oder Keimbelastung bzw. Anzahl an Mikroorganismen.

Der *"Änderungszielwert"* ist ein vorbestimmter und vorgegebener Wert des Zustandsparameters, welcher charakteristisch dafür ist, dass die angestrebte Behandlung des Mediums erfolgreich war. Der Änderungszielwert kann durch Standardversuche im Labormaßstab ermittelt werden.

Unter einem *"Warnsignal"* ist jede Art von Zeichen zu verstehen, welche von der Auswertevorrichtung ausgegeben wird und anzeigt, dass der vorgegebene Änderungszielwert nicht erreicht wurde, also eine Fehlfunktion und nicht erfolgreiche PEF-Behandlung des Mediums vorlag. Mögliche Warnsignale sind optische Signale, Audiosignale oder elektrische bzw. Datensignale, die von einem Empfänger, beispielsweise dem Bediener des Systems oder einer Anzeigeeinheit wie einer Lampe, einem Lautsprecher oder Computer erkannt werden können.

Der *"Grenzwert"* spiegelt einen Toleranzbereich um den vorgegebenen Änderungszielwert wieder, wobei die Differenz sowohl die Abweichung ober- als auch unterhalb des Änderungszielwerts berücksichtigt und somit sowohl eine Unterbehandlung, also nicht ausreichende Behandlung, als auch eine Überbehandlung, bei welcher eine zu starke Behandlung des Mediums erfolgte, abdecken kann.

Die Erfindung kann mit den folgenden, jeweils für sich vorteilhaften und beliebig miteinander kombinierbaren Weiterentwicklungen und vorteilhaften Ausgestaltungen weiter verbessert werden.

Das System umfasst ferner eine Förderstrecke zum Transport des Mediums. Das System kann dabei sowohl für eine kontinuierliche Prozessüberwachung, vorzugsweise online, ausgerichtet sein, als auch für eine Batch-Überwachung, bei welcher das Medium entlang der Förderstrecke zum Elektroporator transportiert, im Elektroporator behandelt und anschließend aus dem Elektroporator ausgeführt wird. Bei einem beispielhaften Verfahren kann das Medium also sowohl kontinuierlich durch den Elektroporator als auch intermittierend zum Elektroporator hin- und von diesem abgeführt werden. Die Förderstrecke kann eine Rohrleitung und/oder ein Förderband umfassen. Rohrleitungen sind zur Behandlung von pumpfähigen Medien, beispielsweise flüssigen Medien wie Fruchtsäften, Smoothies oder Milchprodukten einsetzbar. Bei festen Medien oder Schüttgütern kann ein Förderband oder eine Förderschnecke als Förderstrecke eingesetzt werden. Das System umfasst einen Antrieb zum Transport des Mediums, beispielsweise eine Pumpe oder einen Motor. Das System umfasst eine Förderanlage mit einer Förderstrecke und einem Antrieb zum Transport des Mediums auf der Förderstrecke.

Gemäß einer weiteren Ausführungsform kann der Elektroporator wenigstens zwei Elektroden aufweisen, die mit einem Impulsgenerator verbunden sind. Die Elektroden können, selbst wenn sie nicht unmittelbar mit dem zu behandelnden Medium in Kontakt kommen müssen, vorzugsweise aus Edelstahl oder Titan gefertigt sein. Die zwei Elektroden bilden einen Kondensator und der Raum zwischen den beiden Elektroden bildet die Behandlungskammer des Elektroporators, in welchem das gepulste elektrische Feld erzeugt wird. Die Elektroden können koaxial, kollinear, konisch oder parallel zueinander angeordnet sein und ein homogenes elektrisches Feld zur gleichmäßigen Behandlung des Mediums erzeugen. Der Impulsgenerator als Spannungsquelle kann beispielsweise ein Hochspannungsimpulsgenerator, wie ein Marx-Generator sein, mit dem elektrische Impulse einer hohen Spannung im Kilovoltbereiche und einer kurzen Dauer im Mikro- bis Millisekundenbereich generiert werden können.

Das System umfasst ferner eine Steuereinheit zum Einstellen einer Fördergeschwindigkeit des transportierten Mediums und/oder wenigstens eines Betriebsparameters des Elektroporators. Die Steuereinheit kann beispielsweise die Geschwindigkeit des Antriebs einstellen, um eine erwünschte Fördergeschwindigkeit zu erreichen. Die Steuereinheit, welche über eine Steuerleitung mit der Förderstrecke bzw. dem Antrieb und/oder dem Elektroporator, insbesondere dessen Impulsgenerator verbunden sein kann, kann als Betriebsparameter des Elektroporators beispielsweise die erzeugte Feldstärke, die Pulsdauer, die Pulsfrequenz, die Pulsform, die Pulsspannung, die Stromstärke und/oder die spezifische Energie, welche je Zeiteinheit in das zu behandelnde Medium eingetragen wird, auf einen gewünschten Wert einstellen.

Beim einem beispielhaften Verfahren kann somit die Fördergeschwindigkeit des transportierten Mediums und/oder ein Betriebsparameter des Elektroporators, beispielsweise die Feldstärke, Pulsdauer, Pulsfrequenz, Pulsform, Pulsspannung, Polarität, Stromstärke und/oder spezifische Energie eingestellt werden.

Das erfindungsgemäße System kann ferner eine Sperrvorrichtung zur Unterbindung des Austritts des Mediums aus dem System bei Ausgabe des Warnsignals umfassen. Die Sperrvorrichtung kann beispielsweise ein Ventil enthalten, welches bei Ausgabe eines Warnsignal von der Auswertevorrichtung geschlossen und den Medienaustrag aus dem System unterbindet. Die Sperrvorrichtung kann auch derart sein, dass die Transportrichtung des Mediums umgekehrt und eine Weiterführung des Mediums entlang der Prozesslinie vermieden wird. Die Sperrvorrichtung kann mit der Auswertevorrichtung signalübertragend gekoppelt sein, so dass der Austritt des Mediums automatisch unterbunden wird, sobald ein Warnsignal von der Auswertevorrichtung ausgegeben wird. Die Kopplung kann sowohl direkt, als auch indirekt, beispielsweise über die Steuereinheit des Systems erfolgen.

Wenn in der vorliegenden Anmeldung von einer Kopplung bzw. Datenübertragung gesprochen wird, beinhaltet dies sowohl eine kabelgebundene als auch kabellose Kopplung bzw. Übertragung, beispielsweise über Leitungen oder mittels Funktechnologie. Beim beispielhaften Verfahren kann demzufolge der Austritt des Mediums automatisch gestoppt werden, wenn ein Warnsignal ausgegeben wird.

In einer weiteren Ausführungsform umfasst die Messvorrichtung wenigstens ein Thermometer zur Ermittlung des Temperaturanstiegs. Die Messvorrichtung umfasst wenigstens ein Eingangsthermometer zur Ermittlung der Medientemperatur vor Eintritt in den Elektroporator und wenigstens ein Ausgangsthermometer zur Ermittlung der Medientemperatur nach Austritt aus dem Elektroporator, wodurch sich der Temperaturanstieg im kontinuierlichen Betrieb ermitteln lässt. Es hat sich überraschenderweise gezeigt, dass der Temperaturanstieg ein zuverlässiger Parameter des Mediums ist, welcher charakteristisch für eine erfolgreiche Medienhandlung, insbesondere hinsichtlich der Haltbarmachung von Lebensmitteln aufgrund der Inaktivierung von Mikroorganismen, darstellt. Die Messvorrichtung, nämlich das wenigstens eine Eingangs- und das wenigstens eine Ausgangsthermometer können signalübertragend mit der Auswertevorrichtung verbunden sein und auf diese Weise die ermittelte Änderung des Zustandsparameters, beispielsweise ein Temperaturanstieg von der Messvorrichtung an die Auswertevorrichtung weitergeben.

Ferner wird die Fördergeschwindigkeit des Mediums beim Transport durch den Elektroporator bestimmt. Das System weist dazu einen Geschwindigkeitssensor zur Ermittlung der Fördergeschwindigkeit des auf der Förderstrecke durch den Elektroporator transportierten Mediums auf. Der Geschwindigkeitssensor kann beispielsweise eine Durchflussmesseinheit enthalten, durch welche ein Durchflusssignal ausgebbar ist, welches für die Fördergeschwindigkeit charakteristisch ist. Auf dieser Weise lässt sich die je Zeiteinheit geförderte Menge des transportierten Mediums bestimmen. Die ermittelte Fördergeschwindigkeit kann an die Kontrolleinheit ausgegeben werden, welche wiederum in Abhängigkeit von der ermittelten Fördergeschwindigkeit die Parameter des Elektroporators anpasst, um sicherzustellen, dass beim ordnungsgemäßen Betrieb eine ausreichende Behandlung des Mediums erfolgt, beispielsweise die für die Inaktivierung von Mikroorganismen erforderliche Energie durch den Elektroporator in das Medium eingebracht wird. Der Geschwindigkeitssensor erlaubt ferner einen geschlossenen Regelkreis zur Einhaltung einer bestimmten Fördergeschwindigkeit.

In einer weiteren Ausführungsform umfasst das System eine Energiemesseinheit zur Ermittlung des spezifischen Energieeintrags in das Medium während der Behandlung mit dem gepulsten elektrischen Feld. Als Energiemesseinheit kann beispielsweise ein Oszilloskop eingesetzt werden. Die Energiemesseinheit kann den spezifischen Energieeintrag in Abhängigkeit von der ermittelten Fördergeschwindigkeit und den Betriebsparametern des Elektroporators bestimmen. Wird die Energiemesseinheit mit der Steuereinheit gekoppelt, kann ein geschlossener Regelkreis hergestellt werden, welcher sicherstellt, dass entweder die Fördergeschwindigkeit und/oder die Betriebsparameter des Elektroporators entsprechend eingestellt werden, um einen bestimmten spezifischen Energieeintrag in das Medium während der Behandlung im Elektroporator zu erreichen, welcher für die vorgesehene Behandlung des Mediums benötigt wird.

Darüber hinaus umfasst die Auswertevorrichtung eine Auswertevorrichtung zum Vergleichen des ermittelten Temperaturanstiegs des Mediums mit einem vorgegebenen Temperaturanstieg und zum Ausgeben eines Warnsignals, sobald die Differenz zwischen ermitteltem Temperaturanstieg und vorgegebenem Temperaturanstieg einen Grenzwert überschreitet. Dieser Ausführungsform liegt die überraschende Erkenntnis zugrunde, dass sich die Einbringung einer bestimmten spezifischen Energiemenge im Elektroporator, welche für eine Inaktivierung von Mikroorganismen erforderlich ist, makroskopisch in einer bestimmten Temperaturerhöhung des Mediums wiederspiegelt. Obschon die Elektroporation grundsätzlich eine nicht-thermische Behandlungsmethode ist, können gleichwohl geringe Temperaturanstiege von um die 20° bis 30°C stattfinden, die als Maß für eine erfolgreiche Haltbarmachung von Lebensmitteln herangezogen werden können. Gemäß einer Ausführungsform kann der Zieltemperaturanstieg nach folgender Formel berechnet werden:

$$\Delta T = \frac{W_{spec}}{c_p} * f,$$

mit $W_{spec}$ = spezifischer Energieeintrag, $c_p$ = spezifische Wärmekapazität des Produktes und f = Korrelationsfaktor. Der Korrelationsfaktor hängt unter anderem vom zu behandelnden Medium, dessen pH-Wert und/oder der Behandlungsintensität im Elektroporator ab.

Gemäß einer weiteren Ausführungsform kann das System eine Protokolleinheit zur Aufzeichnung von Betriebsparametern des Systems umfassen. Aufgezeichnet und z.B. in einem Speicher der Protokolleinheit abgelegt werden können, insbesondere über ihren zeitlichen Verlauf, sämtliche Parameter des Systems, beispielsweise Fördergeschwindigkeit des Mediums, pH-Wert des Mediums, Druck des Mediums, Temperatur des Mediums, oder Betriebsparameter des Elektroporators.

Die Protokolleinheit ermöglicht eine Dokumentation des erfindungsgemäßen Systems im Betrieb und vereinfacht eine Fehlersuche bzw. lässt Rückschlüsse über die Behandlung bestimmter Chargen des Mediums zu, die eventuell nicht ordnungsgemäß behandelt wurden.

Gemäß einer weiteren Ausführungsform kann das System ferner eine Druckmesseinheit zur Bestimmung des Drucks im Medium umfassen. So kann erfasst werden, ob die Behandlungsstecke mit Produkt gefüllt ist und ein ausreichender Gegendruck zur Unterdrückung der Freisetzung gelöster Gase vorliegt. Die Druckmesseinheit kann insbesondere auch den Druck im Medium nach der Behandlung im Elektroporator messen. Auf diese Weise kann beispielsweise eine zu intensive Behandlung des Mediums im Elektroporator erkannt werden, die sich beispielsweise in einer Schaumbildung aufgrund einer unerwünschten chemischen Reaktion und einem damit verbundenen Druckanstieg im Medium wiederspiegelt. Das System kann ferner einen Überdruckanzeiger zum Ausgeben eines Warnsignals umfassen, sobald der ermittelte Druck im Medium einen vorgegebenen Maximaldruck übersteigt oder unterschreitet. Der Überdruckanzeiger kann in die Druckmesseinheit integriert sein, so dass die Druckmesseinheit unmittelbar das Warnsignal z.B. einen Alarmton ausgibt. Der Überdruckanzeiger kann auch in der Auswertevorrichtung enthalten sein, so dass die Auswertevorrichtung verschiedene Arten von Warnsignalen ausgeben kann, beispielsweise ein Warnsignal bei Vorliegen eines unerwünschten Überdrucks und ein anderes Warnsignal bei einer unerwünschten Abweichung von einem vorgegebenen Änderungszielwert, beispielsweise einem angestrebten Temperaturanstieg während der Behandlung im Elektroporator.

Es kann ferner vorgesehen sein, den pH-Wert des Mediums zu messen, insbesondere den pH-Wert vor Eintritt in den Elektroporator. Das erfindungsgemäße System kann dazu ein pH-Messgerät zur Bestimmung des pH-Wertes vom Medium, vorzugsweise des Mediums vor Eintritt in den Elektroporator umfassen. Der pH-Wert des Mediums kann ein Maß für die Belastung des Mediums mit Mikroorganismen darstellen. Erfahrungsgemäß ist die Belastung eines Mediums mit Mikroorganismen umso geringer, je saurer oder alkalischer das Medium, d.h. je weiter der pH-Wert des Mediums vom physiologischen pH-Wert (neutralem pH-Wert um pH 7) abweicht. Mittels der Bestimmung des pH-Werts durch eine pH-Messeinheit kann somit eine Abschätzung der Belastung des zu behandelnden Mediums mit Mikroorganismen vorgenommen werden. Diese Abschätzung kann wiederum Informationen darüber liefern, wie stark ein Zustandsparameter des Mediums im gepulsten elektrischen Feld zu ändern ist. Der vorliegende Änderungszielwert kann somit in Abhängigkeit vom ermittelten pH-Wert vorgegeben werden und gegebenenfalls kontinuierlich während des Betriebs angepasst werden. Zudem kann durch Messung des pH-Wertes unterschieden werden, ob sich ein Medium oder Wasser (u.a. mit Reinigungslösung) in dem System befindet. Sobald sich Medium im System befindet, kann das System auf die gewünschte Leistung/Intensität gefahren werden. Dazu kann die pH-Messeinheit signalübertragend mit der Auswerteelektronik und/oder der Steuereinheit verbunden sein. Dem System kann auch ein pH-Wert bzw. pH-Bereich des zu behandelnden Mediums vorgegeben werden, welcher für einen ordnungsgemäßen Zustand des Mediums charakteristisch ist. Bei einigen Medien kann es beispielsweise erforderlich sein, diese anzusäuern. Wurde der Schritt des Ansäuerns versehentlich weggelassen, liegt der pH-Wert des Mediums außerhalb des vorbestimmten Bereichs, was mittels der pH-Messeinheit erfasst werden kann. Das erfindungsgemäße System kann in diesem Fall (der von der pH-Messeinheit ermittelte pH-Wert des Mediums liegt außerhalb des für dieses Medium vorbestimmten pH-Bereichs) ein Warnsignal ausgeben.

Im Folgenden wird die Erfindung anhand vorteilhafter Ausgestaltungen mit Bezug auf die Zeichnung beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigt:

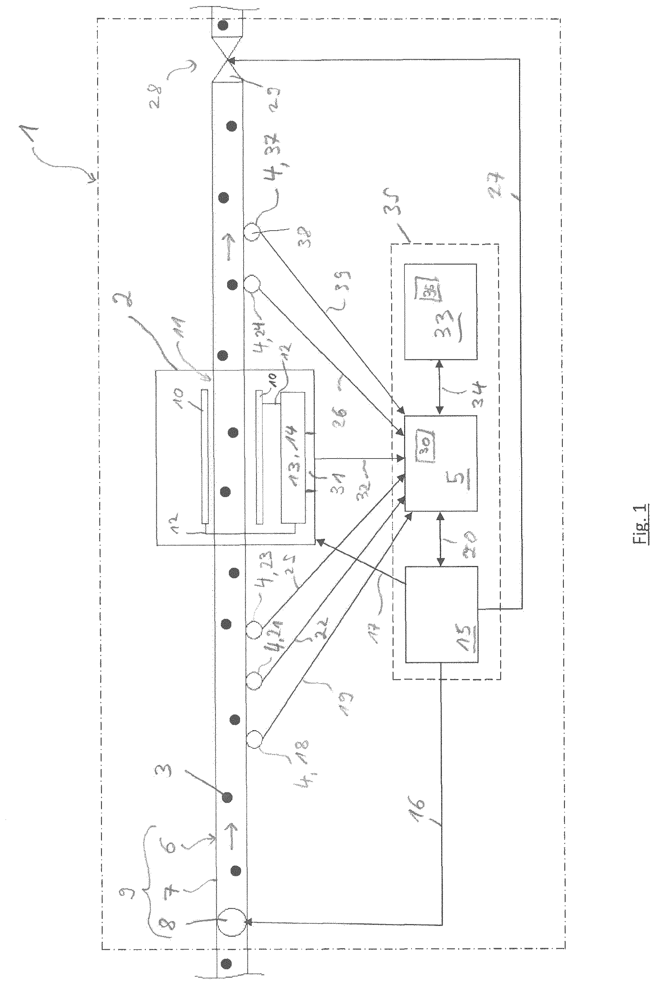

Fig. 1 eine beispielhafte Ausführungsform eines erfindungsgemäßen Systems zur Prozessüberwachung der Behandlung von Medien.

Nachfolgend wird ein beispielhaftes System 1 zur Prozessüberwachung der Behandlung von Medien unter Bezugnahme auf die schematische Darstellung in Fig. 1 vorgestellt. Im Rahmen dieser Vorstellung wird ein beispielhaftes Verfahren zum Überwachen eines Prozesses der Behandlung eines Mediums, das insbesondere unter Verwendung des erfindungsgemäßen Systems, beispielsweise des beispielhaften Systems der Fig. 1 ausgeführt werden kann, mit erläutert.

Das in Fig. 1 gezeigte System 1 umfasst einen Elektroporator 2 zur Behandlung eines Mediums 3 (in Fig. 1 schematisch durch schwarze Punkte dargestellt) mit einem gepulsten elektrischen Feld. Das System 1 umfasst ferner wenigstens eine Messvorrichtung 4 zur Ermittlung einer durch die Behandlung mit dem gepulsten elektrischen Feld hervorgerufenen Änderung eines Zustandsparameters des Mediums 3, und eine Auswertevorrichtung 5 zum Vergleichen der ermittelten Änderung des Zustandsparameters mit einem vorgegebenen Änderungszielwert und zum Ausgeben eines Warnsignals, sobald die Differenz zwischen ermittelter Änderung und vorgegebenem Änderungszielwert einen Grenzwert überschreitet.

In der gezeigten Ausführungsform umfasst das erfindungsgemäße System 1 eine Förderstrecke 6 zum Transport des Mediums 3, beispielsweise des haltbar zu machenden Lebensmittels. Die Förderstrecke 6 umfasst in der beispielhaften Ausführungsform der Fig. 1 eine Rohrleitung 7, in welcher pumpfähige Medien, beispielsweise Säfte, Smoothies oder Milchprodukte, transportiert werden können. Die Förderstrecke 6 kann alternativ ein Förderband oder eine Förderschnecke (nicht gezeigt) umfassen, wenn beispielsweise feste Medien und Schüttmedien zu behandeln sind.

Das System 1 umfasst des Weiteren einen Antrieb 8 zum Transport des Mediums auf der Förderstrecke 6. Der Antrieb 8 kann beispielsweise eine Pumpe sein, welche ein fließfähiges Medium durch die Rohrleitung 7 pumpt, oder ein Motor, welcher ein Förderband oder einen Schneckenförderer antreibt. Die Förderstrecke 6, im gezeigten Ausführungsbeispiel eine Rohrleitung, und der Antrieb 8 zusammen bilden eine Förderanlage 9.

Die Förderstrecke 6 läuft durch den Elektroporator 2, oder anders ausgedrückt, der Elektroporator 2 ist so angeordnet, dass ein auf der Förderstrecke 6 transportiertes Medium 3 mit einem gepulsten elektrischen Feld behandelt werden kann. Der Elektroporator 2 umfasst wenigstens zwei Elektroden 10, die einen Kondensator 11 zur Erzeugung eines elektrischen Feldes in einem Behandlungsabschnitt der Förderstrecke 6 ausbilden. Die Elektroden 10 des Kondensators 11 sind über Energieleitungen 12 mit einer Spannungsquelle 13 verbunden. In der gezeigten Ausführungsform sind die beiden Elektroden 10 des Kondensators 11 an sich gegenüberliegenden Seiten der Förderstrecke 6 und parallel zueinander angeordnet. Bei einer derartigen Elektrodenanordnung kann ein homogenes elektrisches Feld zur gleichmäßigen Behandlung des Mediums 3 erzeugt werden. Es sind allerdings auch andere Varianten der Elektrodenanordnung denkbar, beispielsweise eine koaxiale, kollineare oder konische Anordnung.

Als Spannungsquelle 13 kann ein Impulsgenerator 14, beispielsweise ein Hochspannungsimpulsgenerator wie ein Marx-Generator eingesetzt werden, mit dem elektrische Impulse einer hohen Spannung im Kilovoltbereich und einer kurzen Dauer im Mikro- bis Millisekundenbereich generiert werden können. Die Elektroden 10 können beispielsweise aus Edelstahl oder einer Titanlegierung gefertigt sein.

Das beispielhafte System der Fig. 1 umfasst ferner eine Steuereinheit 15 zum Einstellen einer Fördergeschwindigkeit des transportierten Mediums 3 und/oder wenigstens eines Betriebsparameters des Elektroporators 2. Die Steuereinheit 15 kann über eine Steuerleitung 16 mit dem Antrieb 8 verbunden sein, und auf dieser Weise die Fördergeschwindigkeit, beispielsweise die Durchflussgeschwindigkeit des transportierten Mediums in der Rohrleitung 7 durch Steuerung einer Pumpe einstellen. Die Steuereinheit 15 ist in der gezeigten Ausführungsform über eine weitere Steuerleitung 17 mit dem Elektroporator 2 verbunden und kann auf dieser Weise beispielsweise die Feldstärke, die Pulsdauer, die Pulsfrequenz, die Pulsform, die Pulsspannung, die Stromstärke oder den spezifischen Energieeintrag des Elektroporators steuern. Selbstverständlich können Steuerleitungen 16 und 17 weggelassen werden, wenn die Datenübertragung zwischen Steuereinheit 15 und Antrieb 8 bzw. Elektroporator 2 kabellos, beispielsweise über eine Funkverbindung erfolgt. Der Pfeil der Steuerleitungen 16 bzw. 17, welcher auf den Antrieb 8 bzw. den Elektroporator 2 gerichtet sind, deutet an, dass über diese Leitungen ein Steuersignal von Steuereinheit 15 an den Antrieb 8 bzw. Elektroporator 2 ausgegeben werden kann. Auch wenn dies in Fig. 1 nicht gezeigt ist, kann die Steuerleitung 16 bzw. 17 auch bi-direktional sein, das heißt es können auch Signale vom Antrieb 8 bzw. Elektroporator 2 zurück an die Steuereinheit 15 übertragbar sind. Beispielsweise kann der Antrieb 8 ein Fördersignal über die Steuerleitung 16 zurück an die Steuereinheit 15 schicken, welches charakteristisch für den Betrieb des Antriebs ist, z.B. der Pumpendruck.

Für sämtliche Leitungen, die im Rahmen dieser Erfindung vorgestellt werden, gilt, dass diese sowohl kabelgebunden als auch drahtlos ausgestaltet sein können und dass über diese Leitungen Signale bzw. Daten nicht nur in der durch Pfeile angedeuteten Richtung, sondern auch in die entgegengesetzte Richtung übertragen werden können.

Bei dem beispielhaften System 1 der Fig. 1 kann somit über eine Steuerung sowohl der Fördergeschwindigkeit des Antriebs als auch von Betriebsparametern des Elektroporators eingestellt werden, welche spezifische Energie vom Elektroporator 2 in das auf der Förderstrecke 6 geförderte Medium bei dessen Behandlung eingebracht wird.

In der gezeigten Ausführungsform umfasst das System 1 ferner eine weitere Messvorrichtung 4, nämlich einen Geschwindigkeitssensor 18 zur Ermittlung der Fördergeschwindigkeit des auf der Förderstrecke 6 durch den Elektroporator 2 transportierten Mediums 3. Der Geschwindigkeitssensor 18 kann als Durchflussmesseinheit ausgestaltet sein, durch welche ein Durchflusssignal ausgebbar ist. Dieses Durchflusssignal kann über eine Signalleitung 19 vom Geschwindigkeitssensor 18 an die Auswertevorrichtung 5 übertragen werden. In der Auswertevorrichtung 5 kann das Durchflusssignal mit einem Zielwert verglichen werden. Weicht das aktuelle Durchflusssignal vom Zielsignal ab, so kann die Auswertevorrichtung 5 über eine weitere Signalleitung 20 ein Steuersignal an die Steuereinheit 15 ausgeben, welche wiederum ein Steuersignal über die Signalleitung 16 an den Antrieb weiterleitet, wodurch ein geschlossener Regelkreis für die Regelung der Durchflussgeschwindigkeit im erfindungsgemäßen System 1 realisiert wird. Selbstverständlich ist es auch möglich, dass der Geschwindigkeitssensor 18 das für die Fördergeschwindigkeit charakteristische Signal direkt an die Steuereinheit 15 leitet. Der Geschwindigkeitssensor 18 kann ferner den Widerstand bzw. die Leitfähigkeit des sich auf der Förderstrecke 9 befindlichen Mediums 3 messen und ein entsprechendes Signal, das für den Leitwert bzw. den Widerstand des transportieren Mediums charakteristisch ist, ausgeben. Dadurch lässt sich auf einfache Weise feststellen, ob überhaupt Medium 3 gefördert wird. Es lassen sich zudem Rückschlüsse auf das geförderte Medium ziehen und der für den Widerstand bzw. die Leitfähigkeit des Mediums 3 charakteristische Wert kann von der Auswerteelektronik 5 bzw. der Steuereinheit 15 ebenfalls berücksichtigt werden, um den spezifischen Energieeintrag genau einstellen zu können.

Es ist selbstverständlich auch möglich, auch wenn dies in Fig. 1 nicht gezeigt ist, eine weitere Messvorrichtung vorzusehen, welche den Widerstand bzw. die Leitfähigkeit des Mediums 3 auf der Förderstrecke 6 misst und ein für diesen Parameter charakteristisches Signal ausgebbar ausgestaltet ist. Eine Messung der Leitfähigkeit ermöglicht es auch zu bestimmen, ob sich Medium 3 oder Wasser (gegebenenfalls mit Reinigungsmittel) in der Förderstrecke 6 befindet.

Das in Fig. 1 gezeigte System 1 umfasst ferner eine pH-Messeinheit 21 zur Bestimmung des pH-Wertes des Mediums 3 vor Eintritt in den Elektroporator 2. Diese weitere Messvorrichtung 4, die pH-Messeinheit 21, ist somit in Fließrichtung, die durch einen Pfeil in der Rohrleitung 7 dargestellt ist, vor dem Elektroporator 2 anzuordnen. Bei dem Geschwindigkeitssensor 18 ist das nicht zwingend notwendig. Dieser kann auch in Fließrichtung hinter dem Elektroporator 2 angeordnet sein.

Der pH-Wert des Mediums 3 kann charakteristisch für die Belastung des Mediums 3 mit schädlichen Mikroorganismen sein. So weisen saure bzw. alkalische Lebensmittel, deren pH-Werte weiter vom physiologischen neutralen pH-Wert 7 entfernt sind, eher geringere Belastungen mit schädlichen Mikroorganismen auf. Eine geringe Keimbelastung führt wiederum dazu, dass ein geringerer spezifischer Energieeintrag vom Elektroporator 2 in das Medium 3 erforderlich ist, um das zu behandelnde Medium 3 so zu prozessieren, dass die Belastung mit Mikroorganismen unter einen Maximalwert gesenkt wird, der erforderlich ist, um das Medium 3 haltbarer zu machen.

Die pH-Messeinheit 21 ist im gezeigten Ausführungsbeispiel über eine weitere Signalleitung 22 mit der Auswerteeinheit 5 signalübertragend verbunden. Über die Signalleitung 22 kann somit ein für den pH-Wert des Mediums 3 charakteristisches Signal, das von der pH-Messeinheit 21 bestimmt wird, an die Auswerteeinheit 5 ausgegeben werden. Die Auswertevorrichtung 5 kann dieses Signal über die Signalleitung 22 an die Steuereinheit 15 ausgeben, welche wiederum ein entsprechendes Steuersignal über die Leitung 17 an den Elektroporator 2 ausgibt, um die Elektroporationsbehandlung an das Medium 3 spezifisch anzupassen

In dem beispielhaften Ausführungsbeispiel der Fig. 1 umfasst das System 1 wenigstens ein Thermometer zur Ermittlung des Temperaturanstiegs. Die Temperatur wird dabei als Zustandsparameter verwendet, welcher die Auswertevorrichtung 5 wie nun näher erläutert werden wird, verwendet. In der gezeigten Ausführungsform weist das System 1 wenigstens ein Eingangsthermometer 23 zur Ermittlung der Medientemperatur vor Eintritt in den Elektroporator 2 und wenigstens ein Ausgangsthermometer 24 zur Ermittlung der Medientemperatur nach Austritt aus dem Elektroporator 2 auf. Die Differenz zwischen Eintritts- zu Austrittstemperatur entspricht einer Temperaturdifferenz, welche in der beispielhaften Ausführungsform der ermittelten Änderung eines Zustandsparameters entspricht und in der Auswertevorrichtung 5 mit einem vorgegebenen Änderungszielwert, also einer vorgegebenen Zieltemperaturdifferenz verglichen wird.

Eingangsthermometer 23 und Ausgangsthermometer 24 sind über eine Signalleitung 25 bzw. 26 signalübertragend mit der Auswerteeinheit 5 verbunden. Von den Thermometern 23 bzw. 24 sind somit Temperatursignale ausgebbar, welche über die entsprechende Signalleitung 25 bzw. 26 an die Auswerteeinheit 5 übertragen werden können. Die Auswerteeinheit 5 vergleicht die Eintritt- und die Austrittstemperatur und berechnet daraus zunächst die Temperaturdifferenz als ermittelte Änderung des Zustandsparameters. In der Auswerteeinheit 5 wird die ermittelte Temperaturdifferenz, also der ermittelte Temperaturanstieg des Mediums 3 dann mit einem vorgegebenen Zieltemperaturanstieg verglichen. Überschreitet die Differenz zwischen ermitteltem Temperaturanstieg und vorgegebenen Zieltemperaturanstieg einen vorgegebenen Grenzwert, gibt die Auswertevorrichtung ein Warnsignal aus. Das ausgegebene Warnsignal kann beispielsweise ein visuelles oder Audiosignal in Form einer Warnlampe oder einer Warnsirene sein, welche eine nicht ordnungsgemäße Behandlung des Mediums anzeigt.

Bei der gezeigten Ausführungsform wird das Warnsignal von der Auswerteeinheit 5 zunächst über die Steuerleitung 20 an die Steuereinheit 15 ausgegeben, welche es dann über eine weitere Steuerleitung 27 an eine Sperrvorrichtung 28 überträgt. Die Sperrvorrichtung 28 unterbindet den Austritt des Mediums 3 aus dem System 1 bei Ausgabe des Warnsignals.

In dem gezeigten Ausführungsbeispiel ist die Sperrvorrichtung 28 als Sperrventil 29 ausgebildet, welches in Fließrichtung dem Elektroporator 2 nachgeschaltet ist. Sobald ein Warnsignal von der Auswerteeinheit 5 ausgegeben wird, wird das Sperrventil 29 geschlossen und ein Austritt des Mediums 3 aus dem erfindungsgemäßen System 1 unterbunden. Alternativ könnte der Antrieb 8 gleichzeitig als Sperrvorrichtung eingesetzt werden, indem der Antrieb bei Ausgabe eines Warnsignals gestoppt und die Förderung des Mediums 3 auf der Förderstrecke 6 angehalten wird. Eine weitere Möglichkeit, die nicht gezeigt ist, wäre anstelle eines Sperrventils 29 ein T-Ventil einzusetzen, das im Regelbetrieb, also bei ordnungsgemäßer Behandlung des Mediums, das Medium 3 aus dem System 1 ausschleust. Bei Ausgabe eines Warnsignals wird der Ausgang des T-Ventils umgeschaltet und das Medium 3 über einen Bypass innerhalb des Systems 1 zurückgeleitet und wieder in die Förderstrecke 6 an einer Stelle zurückgeführt, die in Fließrichtung vor dem Elektroporator 2 liegt. Über eine solche Bypass-Leitung könnte das Medium 3 innerhalb des Systems 1 solange zirkuliert werden, bis die erwünschte Änderung des Zustandsparameters im Medium erreicht und die Ausgabe des Warnsignals aufgehoben wird.

In der beispielhaft gezeigten Ausführungsform der Fig. 1 vergleicht die Auswertevorrichtung 5 den ermittelten Temperaturanstieg des Mediums während der Behandlung im Elektroporator 2 mit einem vorgegebenen Zieltemperaturanstieg und gibt ein Warnsignal aus, sobald die Differenz zwischen ermitteltem Temperaturanstieg und vorgegebenem Zieltemperaturanstieg einen Grenzwert überschreitet.

Der Zieltemperaturanstieg kann nach folgender Formel 1 berechnet werden:

$$\Delta\text{T} = \frac{W_{spec}}{c_p} * f,$$

wobei $W_{spec}$ für den spezifischen Energieeintrag, $c_p$ für die spezifische Wärmekapazität des Mediums und $f$ für einen Korrelationsfaktor steht. Der Korrelationsfaktor kann beispielsweise die Art des Mediums, die erwünschte Behandlungsintensität im Elektroporator, den pH-Wert, die Leitfähigkeit des Mediums oder weitere Faktoren berücksichtigen.

Um sicherzustellen, dass der Elektroporator 2 den erforderlichen spezifischen Energieeintrag in das Medium einbringt, kann das erfindungsgemäße System eine Energiemesseinheit 30 zur Ermittlung des spezifischen Energieeintrag in das Medium 3 während der Behandlung mit dem gepulsten elektrischen Feld aufweisen. Die Energiemesseinheit 30 kann den spezifischen Energieeintrag in Abhängigkeit von der ermittelten Fördergeschwindigkeit und Betriebsparametern des Elektroporators 2 bestimmen. Die Betriebsparameter des Elektroporators können beispielsweise durch ein Oszilloskop 31 ermittelt werden, welches den zeitlichen Verlauf der Pulsspannungen des Kondensators 11, inklusive beispielsweise der Pulsdauer, der Pulsfrequenz, der Pulsform und gegebenenfalls der erzeugten Stromstärke feststellt. Die vom Oszilloskop 31 ermittelten Parameter können über eine Signalleitung 32 vom Oszilloskop 31 an die Energiemesseinheit 30 übertragen werden.

Im gezeigten Ausführungsbeispiel ist der Oszillator 31 als integrierter Bestandteil des Elektroporators 2 dargestellt. Es ist genau so gut möglich, das Oszilloskop in die Auswerteeinheit 5 zu integrieren oder als separates Bauteil zu konzipieren.

In der gezeigten beispielhaften Ausführungsform ist die Energiemesseinheit 30 beispielhaft in die Auswerteeinheit 5 integriert, was vorteilhaft ist, weil die Auswerteeinheit 5 über die Signalleitung 19 ein für die Fördergeschwindigkeit charakteristisches Signal und über die Signalleitung 32 die Betriebsparameter des Elektroporators 2 vom Oszilloskop 31 erhält und aus diesen Parametern den spezifischen Energieeintrag in das Medium während der Behandlung mit dem gepulsten elektrischen Feld bestimmen kann. Selbstverständlich ist es auch möglich, die Energiemesseinheit 30 nicht in die Auswerteeinheit 5 zu integrieren, sondern als separate Einheit auszugestalten oder sogar in den Elektroporator 2 zu integrieren, woraufhin dann aber eine weitere Signalleitung zwischen Elektroporator 2 und Geschwindigkeitssensor 18 erforderlich wäre.

Das beispielhafte System 1 der Fig. 1 umfasst ferner eine Druckmesseinheit 37 zur Bestimmung des Drucks im Medium 3 nach der Behandlung im Elektroporator 2. Das System kann ferner einen Überdruckanzeiger 38 zum Ausgeben eines Warnsignals, sobald der ermittelte Druck im Medium 3 einen vorgegebenen Maximaldruck übersteigt, aufweisen. In der gezeigten Ausführungsform ist Überdruckanzeiger 38 in die Druckmesseinheit 37 integriert und kann das Warnsignal bei Übersteigen eines Maximaldrucks über eine Signalleitung 39 an die Auswerteeinheit übertragen, welche wiederum geeignete Maßnahmen, beispielsweise ein Sperren des Medienaustrags in die Wege leiten kann. Der Überdruckanzeiger 38 könnte auch in die Auswerteeinheit 5 integriert werden. In diesem Fall würde die Druckmesseinheit 37 ein für den ermittelten Druck im Medium charakteristisches Signal über die Signalleitung 39 an die Auswerteeinheit 5 ausgeben, welche dieses Signal mit einem maximal zulässigen Maximaldruck vergleicht und im Falle eines Überschreitens des Drucks im Medium ein Warnsignal ausgibt. Die Überwachung des Drucks im Medium 3 nach der Behandlung im Elektroporator 2 ist insofern vorteilhaft, als ein unverhältnismäßiger Druckanstieg im Medium darauf zurückzuführen sein kann, dass eine Überbehandlung des Mediums 3 im Elektroporator 2, also ein zu starker Energieeintrag stattgefunden hat, welcher in einer unerwünschten Schaumbildung zum Ausdruck kommt. Die Schaumbildung führt zu einem Druckanstieg im Medium 3 und kann durch unerwünschte Reaktionen im Medium hervorgerufen werden.

Das erfindungsgemäße System 1 der beispielhaften Ausführungsform der Fig. 1 umfasst ferner eine Protokolleinheit 33 zur Aufzeichnung von Betriebsparametern des Systems. Die Betriebsparameter können in der Protokolleinheit insbesondere in ihrem zeitlichen Verlauf aufgezeichnet und zu Dokumentationszwecken gespeichert werden. In der gezeigten Ausführungsform ist die Protokolleinheit 33 über eine Signalleitung 34 mit der Auswerteeinheit 5 daten- bzw. signalübertragend verbunden. Wie durch den in Strichlinien gezeichneten Kasten angedeutet ist, kann das System 1 eine zentrale Steuer- und Kontrollzentrale 35 aufweisen, welche die Auswerteeinheit 5, die Steuereinheit 15 und die Protokolleinheit 33 umfasst, in der die Signale für sämtliche ermittelten Betriebsparameter des Systems 1 eingehen und von welcher sämtliche Steuersignale inklusive der Warnsignale ausgegeben werden.

Die Steuer- und Kontrollzentrale 35 kann eine Schnittstelle zur Dateneingabe aufweisen, um den vorgegebenen Änderungszielwert in die Auswerteeinheit 5 zu geben. Es kann eine grafische Benutzeroberfläche vorgesehen sein, über welche der Benutzer Information des Systems abrufen, in die Einstellungen des Systems 1 eingreifen kann bzw. auf Daten, die im Speicher 34 der Protokolleinheit hinterlegt sind, zugreifen kann.

Mit dem erfindungsgemäßen System 1 kann ein HACCP-konformes System zum Haltbarmachen von Lebensmitteln bereitgestellt werden, bei welchem der für die zur Haltbarmachung notwendige Abtötung von schädlichen Mikroorganismen im Medium, welche durch Anlegen eines gepulsten elektrischen Feldes im Elektroporator 2 erreicht wird, dadurch überwacht wird, dass ein bestimmter Temperaturanstieg im Medium 3 hervorgerufen wird, welcher die erfolgreiche Behandlung zur Haltbarmachung des Lebensmittel anzeigt und welches im Falle einer unzureichenden Behandlung eine Warnung ausgibt und die Weiterverarbeitung eines unsachgemäß behandelten Mediums unterbinden kann.

**Bezugszeichen**

| | |
|---|---|
| 1 | System |
| 2 | Elektroporator |
| 3 | Medium |
| 4 | Messvorrichtung |
| 5 | Auswertevorrichtung |
| 6 | Förderstrecke |
| 7 | Rohrleitung |
| 8 | Antrieb |
| 9 | Förderanlage |
| 10 | Elektroden |
| 11 | Kondensators |
| 12 | Energieleitungen |
| 13 | Spannungsquelle |
| 14 | Impulsgenerator |
| 15 | Steuereinheit |
| 16 | Steuerleitung |
| 17 | Steuerleitung |
| 18 | Geschwindigkeitssensor |
| 19 | Signalleitung |
| 20 | Signalleitung |
| 21 | pH-Messeinheit |
| 22 | Signalleitung |
| 23 | Eingangsthermometer |
| 24 | Ausgangsthermometer |
| 25 | Signalleitung |
| 26 | Signalleitung |
| 27 | Steuerleitung |
| 28 | Sperrvorrichtung |
| 29 | Sperrventil |
| 30 | Energiemesseinheit |
| 31 | Oszilloskop |
| 32 | Signalleitung |
| 33 | Protokolleinheit |
| 34 | Signalleitung |
| 35 | Steuer- und Kontrollzentrale |
| 37 | Druckmesseinheit |
| 38 | Überdruckanzeiger |
| 39 | Signalleitung |

**Patentansprüche**

1. System (1) zur Prozessüberwachung der Behandlung von Medien (3), insbesondere HACCP-konformes System (1) zur Haltbarmachung von Lebensmitteln, umfassend:

   - eine Förderstrecke (6) und einen Antrieb (7) zum Transport des Mediums (3), einen Elektroporator (2) zur Behandlung eines Mediums (3) mit einem gepulsten elektrischen Feld,
   - einen Geschwindigkeitssensor zur Ermittlung der Fördergeschwindigkeit des auf der Förderstrecke (6) durch den Elektroporator (2) transportierten Mediums (3),
   - wenigstens eine Messvorrichtung (4) zur Ermittlung eines durch die Behandlung mit dem gepulsten elektrischen Feld hervorgerufenen Temperaturanstiegs des Mediums (3), wobei die Messvorrichtung (4) wenigstens ein Eingangsthermometer (23) zur Ermittlung der Medientemperatur vor Eintritt in den Elektroporator (2) und wenigstens ein Ausgangsthermometer (24) zur Ermittlung der Medientemperatur nach Austritt des Elektroporators (2) umfasst, und
   - eine Steuereinheit (15) zum Einstellen einer Fördergeschwindigkeit des transportierten Mediums (3) und/oder wenigstens eines Betriebsparameters des Elektroporators (2),

   wobei eine Auswertevorrichtung (5) zum Vergleichen des ermittelten Temperaturanstiegs mit einem vorgegebenen Änderungszielwert und zum Ausgeben eines Warnsignals, sobald die Differenz zwischen ermitteltem Temperaturanstieg und vorgegebenem Temperaturanstieg einen Grenzwert überschreitet, wobei die Steuereinheit (15) ausgestaltet ist, wenigstens einen Betriebsparameter des Elektroporators (2) in Abhängigkeit von der ermittelten Fördergeschwindigkeit anzupassen.

2. System (1) gemäß Anspruch 1, wobei der Elektroporator (2) wenigstens zwei Elektroden (10) aufweist, die mit einem Impulsgenerator (14) verbunden sind.

3. System (1) gemäß einem der Ansprüche 1 bis 2, ferner umfassend eine Energiemesseinheit (30) zur Ermittlung des spezifischen Energieeintrags in das Medium (3) während der Behandlung mit dem gepulsten elektrischen Feld.

**4.** System (1) gemäß Anspruch 3, wobei die Energiemesseinheit (30) den spezifischen Energieeintrag in Abhängigkeit von der ermittelten Fördergeschwindigkeit und Betriebsparametern des Elektroporators (2) bestimmt.

**5.** System (1) gemäß einem der Ansprüche 1 bis 4, wobei sich der vorgegebene Änderungszielwert nach folgender Formel berechnet:

$$\Delta T = \frac{W_{spec}}{c_p} * f,$$

mit $W_{spec}$ = spezifischer Energieeintrag, $c_p$ = spezifische Wärmekapazität des Mediums (3) und f = Korrelationsfaktor.

**6.** System (1) gemäß einem der Ansprüche 3 bis 5, wobei die Energiemesseinheit (30) ein Oszilloskop (31) umfasst.

**7.** System (1) gemäß einem der Ansprüche 1 bis 6, ferner umfassend eine Protokolleinheit (33) zur Aufzeichnung von Betriebsparametern des Systems (1).

**8.** System (1) gemäß einem der Ansprüche 1 bis 7, ferner umfassend eine Sperrvorrichtung (28) zur Unterbindung des Austritts von Medium (3) aus dem System (1) bei Ausgabe des Warnsignals.

**9.** System (1) gemäß einem der Ansprüche 1 bis 8, ferner umfassend eine Druckmesseinheit zur Bestimmung des Drucks im Medium (3) nach der Behandlung im Elektroporator (2).

**10.** System (1) gemäß Anspruch 9, ferner umfassend einen Überdruckanzeiger (38) zum Ausgeben eines Warnsignals, sobald der ermittelte Druck im Medium (3) einen vorgegebenen Maximaldruck übersteigt oder unterschreitet.

**11.** System (1) gemäß einem der Ansprüche 1 bis 10, ferner umfassend eine pH-Messeinheit zur Bestimmung des pH-Wertes vom Medium (3) vor Eintritt in den Elektroporator (2).

**Claims**

**1.** A system (1) for process monitoring of the treatment of media (3), in particular HACCP-compliant system (1) for the preservation of foodstuffs, comprising:

- a conveyor section (6) and a drive (7) for transporting the medium (3), an electroporator (2) for treating a medium (3) with a pulsed electric field,

- a speed sensor for determining the conveying speed of the medium (3) transported on the conveyor section (6) by the electroporator (2),
- at least one measuring device (4) for determining a temperature rise of the medium (3) caused by the treatment with the pulsed electric field, wherein the measuring device (4) comprises at least one input thermometer (23) for determining the medium temperature before entry into the electroporator (2) and at least one output thermometer (24) for determining the medium temperature after exit from the electroporator (2), and
- a control unit (15) for setting a conveying speed of the transported medium (3) and/or at least one operating parameter of the electroporator (2),

wherein an evaluation device (5) for comparing the determined temperature rise with a predetermined target change value and for emitting a warning signal as soon as the difference between the determined temperature rise and the predetermined temperature rise exceeds a limit value, wherein the control unit (15) is designed to adjust at least one operating parameter of the electroporator (2) as a function of the determined conveying speed.

**2.** The system (1) according to claim 1, wherein the electroporator (2) comprises at least two electrodes (10) which are connected to a pulse generator (14).

**3.** The system (1) according to any one of claims 1 to 2, further comprising an energy measuring unit (30) for determining the specific energy input into the medium (3) during the treatment with the pulsed electric field.

**4.** The system (1) according to claim 3, wherein the energy measuring unit (30) determines the specific energy input as a function of the determined conveying speed and operating parameters of the electroporator (2).

**5.** The system (1) according to any one of claims 1 to 4, wherein the predetermined change target value is calculated according to the following formula:

$$\Delta T = \frac{W_{spec}}{c_p} * f,$$

where $W_{spec}$ = specific energy input, $c_p$ = specific heat capacity of the medium (3) and f = correlation factor.

**6.** The system (1) according to any one of claims 3 to 5, wherein the energy measuring unit (30) comprises an oscilloscope (31).

7. The system (1) according to any one of claims 1 to 6, further comprising a logging unit (33) for logging operating parameters of the system (1).

8. The system (1) according to any one of claims 1 to 7, further comprising a blocking device (28) for preventing the exit of medium (3) from the system (1) upon output of the warning signal.

9. The system (1) according to any one of claims 1 to 8, further comprising a pressure measuring unit for determining the pressure in the medium (3) after treatment in the electroporator (2).

10. The system (1) according to claim 9, further comprising an overpressure indicator (38) for emitting a warning signal as soon as the determined pressure in the medium (3) exceeds or falls below a predetermined maximum pressure.

11. The system (1) according to any one of claims 1 to 10, further comprising a pH measuring unit for determining the pH of the medium (3) before entering the electroporator (2).

## Revendications

1. Système (1) de surveillance de processus du traitement de produits (3), en particulier système (1) conforme au système HACCP pour la conservation de produits alimentaires, comprenant :

   - une ligne de convoyage (6) et un entraînement (7) pour transporter le produit (3), un électroporateur (2) pour traiter un produit (3) avec un champ électrique pulsé,
   - un capteur de vitesse pour déterminer la vitesse de convoyage du produit (3) transporté sur la ligne de convoyage (6) à travers l'électroporateur (2),
   - au moins un dispositif de mesure (4) pour déterminer une augmentation de température du produit (3) provoquée par le traitement avec le champ électrique pulsé, dans lequel le dispositif de mesure (4) comprend au moins un thermomètre d'entrée (23) pour déterminer la température du produit avant l'entrée dans l'électroporateur (2) et au moins un thermomètre de sortie (24) pour déterminer la température du produit après sa sortie de l'électroporateur (2), et
   - une unité de commande (15) pour régler une vitesse de convoyage du produit transporté (3) et/ou au moins un paramètre de fonctionnement de l'électroporateur (2),

   dans lequel un dispositif d'évaluation (5) est destiné à comparer l'augmentation de température détectée à une valeur cible de variation prédéterminée et à émettre un signal d'avertissement dès que la différence entre l'augmentation de température détectée et l'augmentation de température prédéterminée passe au-dessus d'une valeur seuil, dans lequel l'unité de commande (15) est conçue pour adapter au moins un paramètre de fonctionnement de l'électroporateur (2) en fonction de la vitesse de convoyage détectée.

2. Système (1) selon la revendication 1, dans lequel l'électroporateur (2) comprend au moins deux électrodes (10) connectées à un générateur d'impulsions (14).

3. Système (1) selon l'une des revendications 1 et 2, comprenant en outre une unité de mesure d'énergie (30) pour déterminer l'apport d'énergie spécifique au produit (3) pendant le traitement avec le champ électrique pulsé.

4. Système (1) selon la revendication 3, dans lequel l'unité de mesure d'énergie (30) détermine l'apport d'énergie spécifique en fonction de la vitesse de convoyage détectée et de paramètres de fonctionnement de l'électroporateur (2).

5. Système (1) selon l'une des revendications 1 à 4, dans lequel la valeur cible de variation prédéterminée est calculée selon la formule suivante :

$$\Delta T = \frac{W_{spec}}{c_p} * f,$$

où $W_{spec}$ = apport d'énergie spécifique, $c_p$ = capacité thermique massique du produit (3), et f = facteur de corrélation.

6. Système (1) selon l'une des revendications 3 à 5, dans lequel l'unité de mesure d'énergie (30) comprend un oscilloscope (31).

7. Système (1) selon l'une des revendications 1 à 6, comprenant en outre une unité de protocole (33) pour enregistrer des paramètres de fonctionnement du système (1).

8. Système (1) selon l'une des revendications 1 à 7, comprenant en outre un dispositif de blocage (28) pour empêcher la sortie du produit (3) hors du système (1) quand le signal d'avertissement est émis.

9. Système (1) selon l'une des revendications 1 à 8, comprenant en outre une unité de mesure de pression pour déterminer la pression dans le produit (3) après le traitement dans l'électroporateur (2).

**10.** Système (1) selon la revendication 9, comprenant en outre un indicateur de surpression (38) destiné à émettre un signal d'avertissement dès que la pression détectée dans le produit (3) passe au-dessus ou au-dessous d'une pression maximale prédéterminée.

**11.** Système (1) selon l'une des revendications 1 à 10, comprenant en outre une unité de mesure de pH pour déterminer la valeur de pH du produit (3) avant son entrée dans l'électroporateur (2).

Fig.1

**IN DER BESCHREIBUNG AUFGEFÜHRTE DOKUMENTE**

**In der Beschreibung aufgeführte Patentdokumente**

- US 4838154 A